# EUROPÄISCHE PATENTSCHRIFT

(11) **EP 1 309 477 B1**
(45) Veröffentlichungstag und Bekanntmachung des Hinweises auf die Patenterteilung: **05.10.2005**
(21) Anmeldenummer: 01956309.7
(22) Anmeldetag: 11.07.2001
(51) Int. Cl.: B60S 1/34

(54) **BEFESTIGUNGSTEIL FÜR EINEN SCHEIBENWISCHER**
FIXING PIECE FOR A WINDSCREEN WIPER
PIECE DE FIXATION POUR UN ESSUIE-GLACE

(30) Priorität: 10.08.2000 DE 10039053
(43) Veröffentlichungstag der Anmeldung: 14.05.2003
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/002593
(87) Internationale Veröffentlichungsnummer: WO 2002/012034

(56) Entgegenhaltungen:
- EP-A- 0 798 184
- DE-A- 19 615 868
- US-A- 4 502 178

## Beschreibung

### Stand der Technik

Die Erfindung geht aus von einem Befestigungsteil für einen Scheibenwischer nach dem Oberbegriff des Anspruchs 1.

Bekannte Scheibenwischer weisen einen Wischarm auf, der aus einem angetriebenen Befestigungsteil und einem mit diesem über ein Abklappgelenk verbundenen Gelenkteil mit einer Wischstange besteht. Am freien Ende der Wischstange ist ein Wischblatt angelenkt. Während der Schwenkbewegung des Scheibenwischers wird das Wischblatt über die Fahrzeugscheibe geführt, wobei eine Zugfeder das Abklappgelenk vorspannt, so dass das Wischblatt zur Fahrzeugscheibe gezogen wird.

Die Zugfeder ist im u-förmigen Querschnittprofil des Gelenkteils untergebracht und mit einem Ende an einem Querstift am Gelenkteil eingehängt. Mit ihrem anderen Ende ist die Zugfeder über einen c-förmigen Bügel an einer Federeinhängung am Befestigungsteil befestigt. Diese Federeinhängung wird bei bekannten Befestigungsteilen entweder angeformt oder durch einen Nietstift gebildet. So weisen beispielsweise Befestigungsteile, die als Blechbiegeteile ausgeführt sind, in einer Variante einen Stift als Federeinhängung auf (siehe EP-A-798 184). Dieser wird während der Fertigung in Löcher in den Seitenwänden des u-förmigen Querschnittprofils des Befestigungsteils gepresst und anschließend vernietet. Dabei fallen im Gegensatz zu einem einstückigen Befestigungsteil zusätzliche Fertigungszeiten für die Montage und für die Herstellung der zusätzlichen Bauteile an.

Auf die Federeinhängung wirken durch die Zugfeder relativ große Kräfte. Zudem weisen diese Kräfte in Arbeits- bzw. in geklappter Stellung unterschiedliche Richtungen auf, mit beispielsweise 90° Unterschied, so dass es zu einer Relativbewegung zwischen der Zugfeder bzw. dem c-förmigen Bügel und deren Einhängung kommt. Um eine genügend große Festigkeit zu erzielen, besteht der Einhängestift am Befestigungsteil in der Regel aus einem anderen Material als das Blechbiegeteil. Beim Verbinden unterschiedlicher Materialien besteht allerdings die Gefahr einer Kontaktkorrosion im Verbindungsbereich.

Neben einem Teil des Abklappgelenks und einer Federeinhängung weist das Befestigungsteil am gegenüberliegenden Ende noch einen Befestigungsbereich auf, über den der Wischarm fest, aber lösbar mit einer Wischerwelle verbunden ist. Der Befestigungsbereich ist als Wellen-Naben-Verbindung ausgeführt und wird durch eine Aufnahmeöffnung mit einem Innenkonus gebildet, in die das freie Ende der Wischerwelle ragt, welches einen entsprechenden Außenkonus aufweist. Durch eine Schraubenmutter werden die beiden Teile verspannt. Es sind auch Varianten bekannt, wonach sich der konische Verbindungsbereich zwischen einem Ansatz der Schraubenmutter und der Aufnahmeöffnung des Befestigungsteils befindet. Die Form der Aufnahmeöffnung wird auf unterschiedliche Weise erzeugt. Besteht ein Befestigungsteil aus Druckguss oder aus Kunststoff, wird die Aufnahmeöffnung in der Regel beim Gießen oder Spritzen mit ausgeformt, während sie bei Blechbiegeteilen in mehreren Ziehstufen hergestellt wird.

### Vorteile der Erfindung

Nach der Erfindung ist die Federeinhängung eines als Blechbiegeteil ausgeführten Befestigungsteils durch Tiefziehen aus einer Seitenwand des u-förmigen Querschnittprofils geformt. Das Blechbiegeteil ist somit einstückig ausgeführt und weist alle wichtigen Funktionselemente, wie eine Aufnahmeöffnung für eine Wischerwelle, einen Teil des Abklappgelenks und eine Federeinhängung für eine Zugfeder auf. Es sind möglichst viele Funktionen in einem Bauteil integriert, um nachfolgende Montageschritte zu vermeiden. Dadurch werden die Fertigungszeiten und die Kosten reduziert. Außerdem ist an einem einstückigen Befestigungsteil Kontaktkorrosion ausgeschlossen, da es keine kritischen Verbindungsstellen beispielsweise an Nietstiften gibt.

Zum besseren Abstützen bzw. Einleiten der Federkräfte in die Seitenwand des U-Profils weist die tiefgezogene Federeinhängung eine konische Form auf, die sich zur Seitenwand erweitert. Dadurch ist die Federeinhängung stabil ausgeführt, so dass sie sich bei Krafteinwirkung kaum elastisch verformt und dass dadurch die Anlagekraft für das Wischblatt nicht bzw. mit geringer Toleranz beeinflusst wird.

Die Federeinhängung weist eine runde Querschnittform auf. Sie kann auch oval sein, wobei in Arbeitsstellung des Wischarms der größere Durchmesser zweckmäßigerweise in Kraftrichtung der Zugfeder weisen sollte. Die Federeinhängung nimmt im Querschnitt von der Seitenwand bis zu einer Einschnürung ab und von dieser zum freien Ende wieder zu. Zudem ist die Kontur der Einschnürung der Querschnittkontur eines C-förmigen Haltebügels angepasst, so dass die Zugfeder sicher eingehängt ist und nicht durch Erschütterungen von der Einhängung abrutscht. Zur Fixierung der Zugfeder wird ein seitlicher Anschlag benötigt. Dieser wird auf einfache Weise durch Stauchen des freien Endes der Federeinhängung oder in einer Variante der Erfindung durch Lochen und anschließendes Aufweiten des Endbereichs erzeugt.

Um die Reibung zwischen der Federeinhängung und dem c-förmigen Bügel und damit den Verschleiß durch den sich während des Betriebs leicht drehenden C-Bügel zu reduzieren, weist sie im Bereich der Einschnürung zweckmäßigerweise eine Beschichtung aus einem Lagerwerkstoff, z.B. Kunststoff, oder einen zusätzlichen Kunststoffring auf. Dadurch kann der Wischarm leichter von der Fahrzeugscheibe abgeklappt werden. Vorzugsweise ist die Federeinhängung nur aus einer Seitenwand des U-Profils tiefgezogen und ragt bis in den mittleren Bereich des u-förmigen Querschnittprofils. Dadurch wird neben der Federeinhängung ein Freiraum geschaffen, in dem beispielsweise der Schlauch zur Wasserversorgung einer Scheibenwaschanlage untergebracht werden kann. Ein wegen der tiefgezogenen Federeinhängung seitlich sichtbarer Einzug am Befestigungsteil liegt an einer Stelle, die entweder durch das Gelenkteil oder ggf. durch eine Abdeckkappe verdeckt wird.
Dabei ist es vorteilhaft, dass die Federeinhängung von einer nach unten, z.B. zu einer Fahrzeughaube, weisenden Seitenwand des Befestigungsteils ausgeht, um zu vermeiden, dass sich Schmutz und Was.ser in dem nach außen offenen Hohlraum der Federeinhängung ansammelt.

Die Federeinhängung wird erfindungsgemäß in mehreren Ziehstufen hergestellt. Zunächst wird Material großflächig eingezogen, um in allen Bereichen gleichmäßig dicke Wandstärken zu erhalten. Danach wird in mehreren Stufen der konische und am geschlossenen Ende ein zylindrischer Bereich gebildet sowie das als Anschlag ausgebildete Endstück geformt. Da die Aufnahmeöffnung für die Wischerwelle wie die Federeinhängung tief gezogen wird, können beide Bereiche mit einem Werkzeug hergestellt werden, zumal für das Erzeugen beider Bereiche etwa die gleiche Anzahl von Ziehstufen (ca. 5 bis 7) benötigt wird. Das Tiefziehwerkzeug wird dadurch zwar geringfügig aufwendiger, aber die Durchlaufzeiten im Werkzeug werden nicht erhöht. Damit entsteht durch das Herstellen der beiden stark umgeformten Bereiche des Befestigungsteils bei vergleichsweise geringem zusätzlichen Aufwand für die Werkzeugherstellung ein kostengünstiges Bauteil.

Die Aufnahmeöffnung und die Federeinhängung werden zweckmäßigerweise in einer Phase in den noch ebenen Blechstreifen eingebracht. Danach wird durch Abwinkeln der Seitenwände das für das Befestigungsteil charakteristische U-Profil gebildet. Die Federeinhängung befindet sich nach diesem Umformvorgang an einer Seitenwand und die Aufnahmeöffnung für die Wellen-Naben-Verbindung in der Deckwand. Bei Bedarf kann die Positionsgenauigkeit der Federeinhängung nach dem Umbiegen auf einfache Weise mit einem zusätzlichen Kalibrierarbeitsgang sicher gestellt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines Befestigungsteils von oben,
- Fig. 2: ein Ende des Befestigungsteils mit einer Federeinhängung vergrößert aus einer anderen Perspektive,
- Fig. 3-5: einen Teilschnitt eines ebenen Blechteils im Bereich der Federeinhängung in unterschiedlichen Fertigungsstufen,
- Fig. 6-7 Fig. 8: Varianten zu Fig. 5, einen Querschnitt durch ein Befestigungsteil im Bereich der Federeinhängung vor dem Abwinkeln der Seitenwände,
- Fig. 9: einen Querschnitt durch ein Befestigungsteil im Bereich der Federeinhängung nach dem Abwinkeln der Seitenwände und
- Fig. 10: einen Schnitt durch eine Aufnahmeöffnung des Befestigungsteils.

### Beschreibung der Ausführungsbeispiele

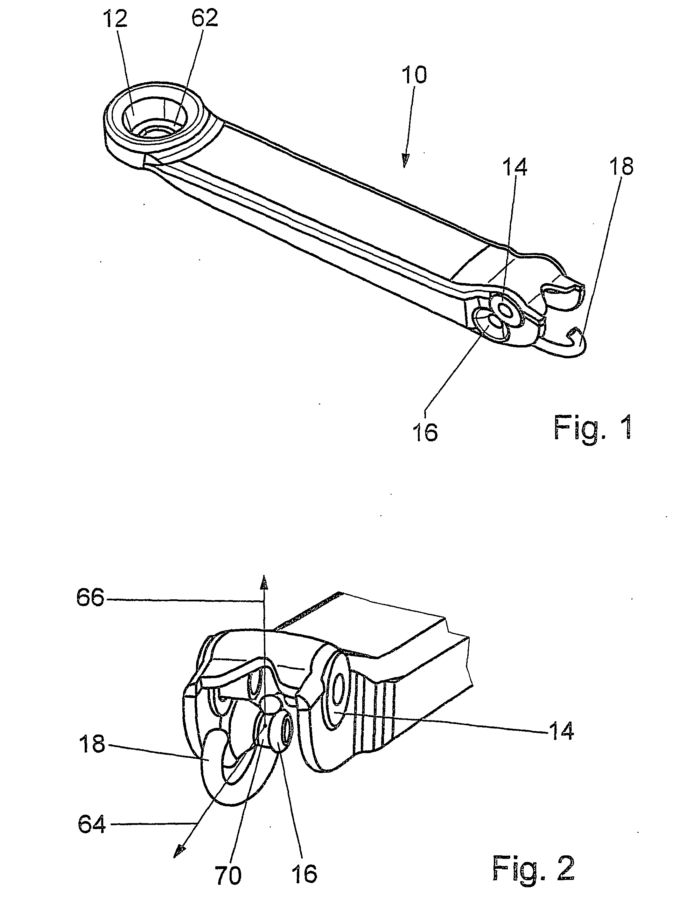

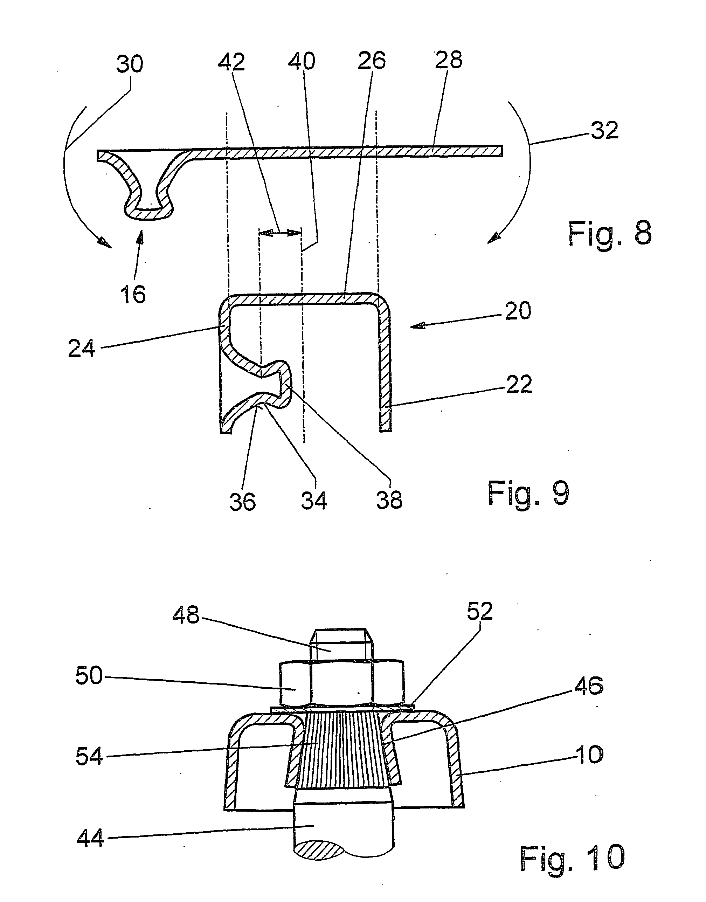

Ein Befestigungsteil 10 eines Scheibenwischers weist an einem Ende eine Aufnahmeöffnung 12 oder 46 für eine Wischerwelle 44 (Fig. 10) auf und bildet am anderen Ende einen Teil 14 eines Abklappgelenks (Fig. 1). Zudem weist das Befestigungsteil 10 an diesem Ende eine angeformte Federeinhängung 16 auf, an der ein c-förmiger Bügel 18 einer nicht dargestellten Zugfeder eingreift. Die Federeinhängung 16 ist durch Tiefziehen aus einer Seitenwand 24 des u-förmigen Querschnittprofils 20 geformt (Fig. 2 und 9).

Über den c-förmigen Bügel 18 wirken relativ große Zugkräfte 64 bzw. 66 aus unterschiedlichen Richtungen auf die Federeinhängung 16. Der Querschnitt der Federeinhängung 16 ist entsprechend stabil gestaltet, indem er ein rundes Hohlprofil aufweist, das im Übergangsbereich zur Seitenwand 24 den größten Querschnitt besitzt und bis zu einer Einschnürung 34 abnimmt. Die Einschnürung 34 bildet den Eingriffsbereich des c-förmigen Bügels 18 und weist deshalb zweckmäßigerweise eine Kontur 36 auf, die der Querschnittkontur des c-förmigen Bügels 18 angepasst ist. Zudem nimmt der Querschnitt der Federeinhängung 16 von der Einschnürung 34 zum freien Ende wieder zu, so dass ein sicherer Sitz des c-förmigen Bügels 18 gewährleistet ist. Dies ist besonders wichtig, zumal der c-förmige Bügel 18 während des Abklappvorgangs eine Relativbewegung zur Federeinhängung 16 ausführt. Um die Reibung zwischen dem c-förmigen Bügel 18 und der Federeinhängung 16 zu verringern, wird der Bereich der Einschnürung 34 zweckmäßigerweise mit einem Lagerwerkstoff beschichtet oder mit einem Ring aus Kunststoff 70 umgeben.

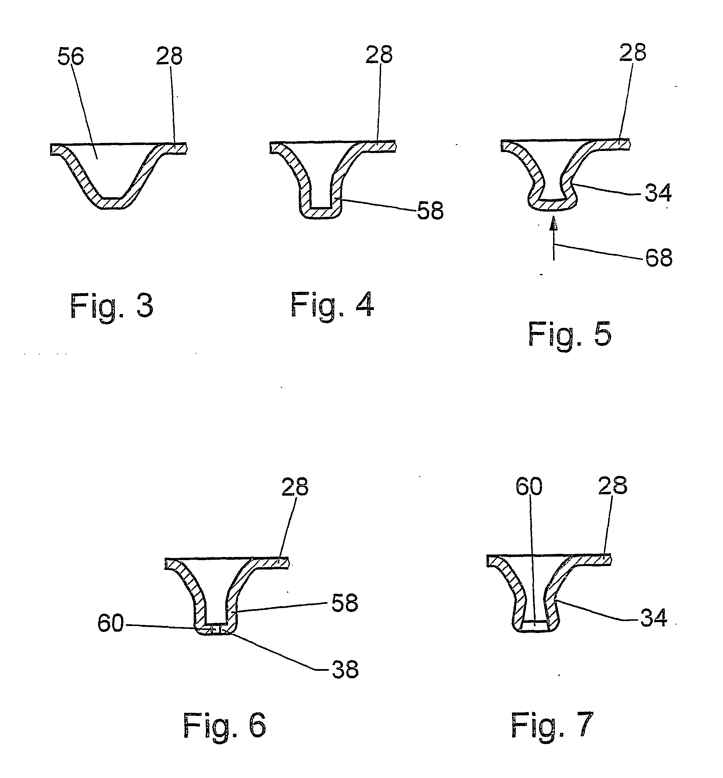

Die Federeinhängung 16 wird in einer Phase tiefgezogen, bei der noch ein ebenes Blech 28 vorliegt. Dabei wird zunächst eine Kalotte 56 geformt, wobei großflächig Material eingezogen wird (Fig. 3). Danach wird in mehreren Stufen ein zylindrischer Teil 58 gebildet (Fig. 4). Dieser wird dann in einem entsprechenden Werkzeug in Längsrichtung 68 gestaucht, wobei die Einschnürung 34 entsteht (Fig. 5). In einer Ausgestaltung der Erfindung wird die Einschnürung 34 hergestellt, indem in den stirnseitigen Boden 38 des zylindrischen Teils 58 eine Öffnung 60 gestanzt wird, die in einem weiteren Arbeitsgang aufgeweitet wird (Fig. 6 und 7).

Nach dem Ausformen der Federeinhängung 16 werden die Teile der Seitenwände 22 und 24 relativ zum Teil der Deckwand 26 in Pfeilrichtung 30 bzw. 32 abgewinkelt, wobei aus dem ebenen Blech 28 das u-förmige Querschnittprofil 20 geformt wird (Fig. 8 und 9). Die Federeinhängung 16 befindet sich dann an der Seitenwand 24 und ragt mit ihrem freien Ende in das u-förmige Querschnittprofil 20. Zur seitlichen Fixierung der Zugfeder weist die Einschnürung 34 einen Abstand 42 zur Profilmitte 40 auf. Dieser wird nach dem Abwinkeln mit einem zusätzlichen Kalibrierarbeitsgang hergestellt.

An der Deckwand 26 des u-förmigen Querschnittprofils 20 ist die Aufnahmeöffnung 12 angeordnet. Sie weist eine konische Form auf, die in das u-förmige Querschnittprofil 20 des Befestigungsteils 10 ragt und sich von der Deckwand 26 bis zu einem Kragen 62 verengt. Die Fig. 10 zeigt den Befestigungsbereich des Befestigungsteils 10, wobei eine Aufnahmeöffnung 46 als Variante dargestellt ist. Eine Wischerwelle 44 weist an ihrem freien Ende einen Konus 54 auf, der in die konische Aufnahmeöffnung 46 passt. Das Befestigungsteil 10 und die Wischerwelle 44 sind fest aber lösbar miteinander verbunden, indem eine Schraubenmutter 50 auf einen Gewindezapfen 48 geschraubt ist. Zur zusätzlichen Sicherung der festen Verbindung weist der Konus 54 eine Riffelung auf und zwischen dem Befestigungsteil 10 und der Schraubenmutter 50 ist eine Scheibe 52 angeordnet. Zweckmäßigerweise wird die Aufnahmeöffnung 12 bzw. 46 durch Tiefziehen hergestellt. Nach der Erfindung wird die Federeinhängung 16 am Befestigungsteil 10 ebenfalls tiefgezogen und beide Tiefziehbereiche werden in einer Phase in das ebene Blech 28 eingebracht.

## Patentansprüche

1. Befestigungsteil (10) eines Scheibenwischers, das an einem Ende eine Aufnahmeöffnung (12, 46) für eine Wischerwelle (44) hat und am anderen Ende einen Teil (14) eines Abklappgelenks bildet sowie durch Tiefziehen, Stanzen und Biegen aus einem ebenen Blech (28) geformt ist, ein u-förmiges Querschnittprofil (20) und eine Federeinhängung (16) aufweist, **dadurch gekennzeichnet, dass** die Federeinhängung (16) durch Tiefziehen aus einer Seitenwand (24) des u-förmigen Querschnittprofils (20) geformt ist.

2. Befestigungsteil (10) nach Anspruch 1, **dadurch gekennzeichnet, dass** die Federeinhängung (16) ausgehend von der Seitenwand (24) bis zu einer Einschnürung (34) im Querschnitt abnimmt und von der Einschnürung (34) zum freien Ende im Querschnitt zunimmt.

3. Befestigungsteil (10) nach Anspruch 2, **dadurch gekennzeichnet, dass** die Kontur (36) der Einschnürung (34) der Querschnittkontur eines c-förmigen Bügels (18) angepasst ist.

4. Befestigungsteil (10) nach einem der vorhergehenden Ansprüche, **dadurch gekennzeichnet, dass** ein stirnseitiger Boden (38) der Federeinhängung (16) eine Öffnung (60) aufweist.

5. Befestigungsteil (10) nach einem der vorhergehenden Ansprüche, **dadurch gekennzeichnet, dass** die Aufnahmeöffnung (12) sich zu einer Deckwand (26) des u-förmigen Querschnittprofils (20) hin konisch erweitert und an ihrem in das Befestigungsteil (10) weisenden Ende einen Kragen (62) aufweist.

6. Befestigungsteil (10) nach einem der Ansprüche 1 bis 4, **dadurch gekennzeichnet, dass** die Aufnahmeöffnung (46) sich zu der Deckwand (26) hin konisch verengt.

7. Befestigungsteil (10) nach einem der vorhergehenden Ansprüche, **dadurch gekennzeichnet, dass** die Federeinhängung (16) im Bereich einer Anlage (34) des c-förmigen Bügels (18) mit einem Lagerwerkstöff beschichtet oder mit einem Ring (7) aus Kunststoff umgeben ist.

8. Verfahren zum Herstellen eines Befestigungsteils (10) nach einem der vorhergehenden Ansprüche, **dadurch gekennzeichnet, dass** zunächst die Federeinhängung (16) in das ebene Blech (28) geformt wird und danach die Teile der Seitenwände (22, 24) relativ zum Teil der Deckwand (26) abgewinkelt werden.

9. Verfahren zum Herstellen eines Befestigungsteils (10) nach Anspruch 2, **dadurch gekennzeichnet, dass** die Einschnürung (34) der Federeinhängung (16) durch Stauchen in Längsrichtung (68) hergestellt wird.

10. Verfahren zum Herstellen eines Befestigungsteils (10) nach Ansprüche 2 und 4, **dadurch gekennzeichnet, dass** die Einschnürung (34) hergestellt wird, indem die Öffnung (60) im Boden (38) der Federeinhängung (16) aufgeweitet wird.

11. Verfahren nach einem der Ansprüche 8 bis 10, **dadurch gekennzeichnet, dass** gleichzeitig mit der Federeinhängung (16) die Aufnahmeöffnung (12, 46) geformt wird, und nach diesem Arbeitsgang die Seitenwände (22, 24) abgewinkelt werden.

## Claims

1. Fastening part (10) of a wiper, which has a receiving opening (12, 46) at one end for a wiper shaft (44)
and forms part (14) of a hinged joint at the other end and is formed from a flat plate (28) by deep-drawing, punching and bending, has a u-shaped cross-sectional profile (20) and a spring attachment (16), **characterized in that** the spring attachment (16) is formed from a side wall (24) of the u-shaped cross-sectional profile (20) by deep-drawing.

2. Fastening part (10) according to Claim 1, **characterized in that** the spring attachment (16) decreases in cross section from the side wall (24) as far as a constriction (34) and increases in cross section from the constriction (34) to the free end.

3. Fastening part (10) according to Claim 2, **characterized in that** the contour (36) of the constriction (34) is matched to the cross-sectional contour of a c-shaped clip (18).

4. Fastening part (10) according to one of the preceding claims, **characterized in that** an end-side base (38) of the spring attachment (16) has an opening (60).

5. Fastening part (10) according to one of the preceding claims, **characterized in that** the receiving opening (12) extends conically towards a covering wall (26) of the u-shaped cross-sectional profile (20) and has a collar (62) at its end facing into the fastening part (10).

6. Fastening part (10) according to one of Claims 1 to 4, **characterized in that** the receiving opening (46) tapers conically towards the covering wall (26).

7. Fastening part (10) according to one of the preceding claims, **characterized in that** in the region of bearing (34) of the c-shaped clip (18) the spring attachment (16) is coated with a bearing material or is surrounded by a ring (7) made of plastic.

8. Method for producing a fastening part (10) according to one of the preceding claims, **characterized in that** first of all the spring attachment (16) is formed in the flat plate (28) and subsequently the parts of the side walls (22, 24) are angled relative to the part of the covering wall (26)

9. Method for producing a fastening part (10) according to Claim 2, **characterized in that** the constriction (34) of the spring attachment (16) is produced by compression in the longitudinal direction (68).

10. Method for producing a fastening part (10) according to Claim 2 and Claim 4, **characterized in that** the constriction (34) is produced by widening the opening (60) in the base (38) of the spring attachment (16).

11. Method according to one of Claims 8 to 10, **characterized in that** the receiving opening (12, 46) is formed at the same time as the spring attachment (16), and after this working step the side walls (22, 24) are angled.

## Revendications

1. Pièce de fixation (10) d'un essuie-glace, dont une extrémité présente une ouverture de réception (12, 46) pour un arbre d'essuie-glace (44) et dont l'autre extrémité forme une partie (14) d'une articulation rabattable, et formée par emboutissage, découpage et pliage d'une tôle plane (28), avec un profil de section transversale (20) en forme de U et une suspension à ressort (16),
**caractérisée en ce que**
la suspension à ressort (16) est formée par emboutissage à partir d'une paroi latérale (24) du profil de section transversale (20) en forme de U.

2. Pièce de fixation (10) selon la revendication 1,
**caractérisée en ce que**
la section transversale de la suspension à ressort (16) diminue à partir de la paroi latérale (24) jusqu'à un rétrécissement (34) et augmente depuis le rétrécissement (34) jusqu'à l'extrémité libre.

3. Pièce de fixation (10) selon la revendication 2,
**caractérisée en ce que**
le contour (36) du rétrécissement est adapté au contour de section transversale d'un étrier (18) en forme de C.

4. Pièce de fixation (10) selon l'une quelconque des revendications précédentes,
**caractérisée en ce qu'**
un fond (38) côté frontal de la suspension à ressort (16) présente une ouverture (60).

5. Pièce de fixation (10) selon l'une quelconque des revendications précédentes,
**caractérisée en ce que**
l'ouverture de réception (12) s'évase en forme de cône en direction d'une paroi de recouvrement (26) du profil de section transversale en forme de U et présente un collet (62) à son extrémité orientée dans la pièce de fixation (10).

6. Pièce de fixation (10) selon l'une quelconque des revendications 1 à 4,
**caractérisée en ce que**
l'ouverture de réception (46) se rétrécit en forme de cône en direction de la paroi de recouvrement (26).

7. Pièce de fixation (10) selon l'une quelconque des revendications précédentes,
**caractérisée en ce que**
la suspension à ressort (16), dans la zone d'un appui (34) de l'étrier (18) en forme de C, est revêtue d'un matériau pour palier ou entourée par un anneau (7) en matière plastique.

8. Procédé de fabrication d'une pièce de fixation (10) selon l'une quelconque des revendications précédentes,
**caractérisé en ce que**
la suspension à ressort (16) est d'abord formée dans la tôle (28) plane et les parties des parois latérales (22, 24) sont ensuite repliées par rapport à la partie de la paroi de recouvrement (26).

9. Procédé de fabrication d'une pièce de fixation (10) selon la revendication 2,
**caractérisé en ce que**
le rétrécissement (34) de la suspension à ressort (16) est obtenu par refoulement dans le sens longitudinal (68).

10. Procédé de fabrication d'une pièce de fixation (10) selon les revendications 2 et 4,
**caractérisé en ce que**
le rétrécissement (34) est obtenu par évasement de l'ouverture (60) dans le fond (38) de la suspension à ressort (16).

11. Procédé selon l'une quelconque des revendications 8 à 10,
**caractérisé en ce que**
l'ouverture de réception (12, 46) est formée en même temps que la suspension à ressort (16), et les parois latérales (22, 24) sont repliées après cette opération.
